# EUROPEAN PATENT SPECIFICATION

(11) **EP 3 039 066 B1**
(45) Date of publication and mention of the grant of the patent: **27.02.2019**
(21) Application number: 14840283.7
(22) Date of filing: 28.08.2014
(51) Int. Cl.: C08K 3/04, C08L 67/02

(54) **ELECTRICALLY INSULATING AND THERMALLY CONDUCTIVE POLYMER COMPOSITIONS**
ELEKTRISCH ISOLIERENDE UND THERMISCH LEITFÄHIGE POLYMERZUSAMMENSETZUNGEN
COMPOSITIONS POLYMÈRES ÉLECTRIQUEMENT ISOLANTES ET THERMOCONDUCTRICES

(30) Priority: 29.08.2013 JP 2013177724
(43) Date of publication of application: 06.07.2016
(73) Proprietor: E. I. du Pont de Nemours and Company, Wilmington, DE 19805 (US)
(72) Inventor: SAGA, Yuji, Utsunomiya-shi, 321-3231 (JP)
(74) Representative: Morf, Jan Stefan
(86) International application number: PCT/US2014/053081
(87) International publication number: WO 2015/031573

(56) References cited:
- JP-A- 2007 107 151
- US-A1- 2001 048 172
- US-A1- 2009 152 491
- US-A1- 2012 157 600
- US-A1- 2012 217 434
- US-A1- 2012 263 940
- US-A1- 2013 202 882
- US-B1- 6 284 817
- US-B2- 6 503 964
- SEONGCHEOL CHOI ET AL: "PVP-assisted synthesis of dense silica-coated graphite with electrically insulating property", MATERIALS LETTERS, vol. 90, 1 January 2013 (2013-01-01), pages 87-89, XP055356170, AMSTERDAM, NL ISSN: 0167-577X, DOI: 10.1016/j.matlet.2012.09.035
- CHOI SEONGCHEOL ET AL: "Synthesis of silica-coated graphite by enolization of polyvinylpyrrolidone and its thermal and electrical conductivity in polymer composites", CARBON, ELSEVIER, OXFORD, GB, vol. 60, 15 April 2013 (2013-04-15), pages 254-265, XP028559696, ISSN: 0008-6223, DOI: 10.1016/J.CARBON.2013.04.034

## Description

Electronic devices, such as light emitting diodes (LED), have been developed to generate increasingly greater light output. The higher the light output of the LED, the greater the electrical requirements of the LED and the greater the thermal output of the LED. Thermal management of high power electronic devices such as LEDs is crucial in order to further their efficiency and safety. Particularly for LEDs as electronic devices that are handled, the likelihood of electric shock must be minimized.

Managing thermal output of LEDs can occur by dissipating heat through a heat sink. Some LED housings function as a heat sink with aluminum commonly used as the heat sink material. However, a metal housing is relatively heavy compared to one made of polymer material. Since aluminum is electrically conductive, the LED housing must be designed to insulate the metal portion from internal electrical components in order to prevent electric shock.

Because of the increased power output of LEDs, electrically insulating compositions having good thermal conductivity are needed for use in such devices, especially in LED housings.

The following references disclose electrically insulating compositions. U.S. Patent Application Publication Number ["US Pat. App. Pub. No."] 2009/0152491 discloses thermally conductive polymer resin compositions comprising polymer, spherical or granular shape thermally conductive filler, and platy thermally conductive filler. U.S. Pat. App. Pub. No. 2010/0219381 discloses a thermoplastic polymer having two fillers, both electrically insulating and thermally conductive. U.S. Pat. App. Pub. No. 2012/0157600 discloses a molded thermoplastic article comprising one or more thermoplastic polymers, a filler with thermal conductivity of at least 5 W/mK, carbon black powder, and a fibrous filler having a thermal conductivity of no more than 5 W/mK. International Pat. App. Pub. No. WO 2011/106252 discloses a composition having a thermal conductivity of at least about 3 W/mK and having thermally conductive liquid crystal polymers comprising graphite, talc having an average particle size within the range of 10 to 100 microns, and a fibrous filler having an aspect ratio within the range of 3 to 20. U.S. Pat. No. 6620497 discloses an electrically insulating and thermally conductive polymer composition with boron nitride coated carbon flakes. US 2012/0217434 A1 discloses in example 5 (see Table 1) a composition comprising polybutylene terephthalate, 31 vol% talc (platelet with D₅₀= 15.6 micrometers), and 13 vol% graphite. The composition has a volume resistivity higher than 10⁷ Ohm cm, and a thermal conductivity of 1.49 W/m K.

Described herein are polymer compositions that, when molded, exhibit a unique combination of a minimum thermal conductivity and a minimum volume resistivity (i.e., electrical insulation) such that articles made of these compositions, such as housings or driver cases for electrical and electronic devices, reliably serve as heat sinks to dissipate heat into the ambient atmosphere and at the same time minimize electric shock upon handling.

To that end, described herein are polymer compositions comprising:
(a) 20 to 70 volume percent of at least one polymer;
(b) 10 to 35 volume percent of at least one coated carbon particle;
(c) 7 to 35 weight percent of at least one electrically insulating inorganic platy filler having a maximum length of longest dimension of 20 microns;
(d) optionally, 0.5 to 25 volume percent of a copolyester elastomer;
wherein the volume percent of each component (a) to (d) is based on the total volume percent of the polymer composition; and these polymer compositions, when molded, have a volume resistivity of greater than 1x10¹⁴Ω•cm, when measured according to ASTM D-257 at 100 Volts; and a thermal conductivity of at least 2.0 W/mK, when measured according to ASTM E-1461. The at least one polymer is selected from the group consisting of thermoplastic polymers, thermosetting polymers, polyarylene sulfides, aramid polymers, polyesters, polyamides, polycarbonates, polyolefins, polyacetals, and mixtures of these. The at least one coated carbon particle is selected from the group consisting of coated graphite, coated carbon fiber, coated glass carbon, coated amorphous carbon, and mixtures of these. The least one electrically insulating, inorganic platy filler is selected from the group consisting of metal oxides, metal carbonates, carbonate minerals, metal hydroxides, metal nitrides, metal sulfides, phosphate minerals, clay minerals, silicate minerals, glass materials, and mixtures of these.

Also described herein are processes for preparing these compositions and articles made of these compositions.

### DETAILED DESCRIPTION

### Definitions and Abbreviations

The following definitions and abbreviations are to be used to interpret the meaning of the terms discussed in the description and recited in the claims.

As used herein, the terms "light-emitting diode" or "LED" refer to a device comprising at least one light-emitting semiconductor diode, an electrical connection capable of connecting the diode to an electrical circuit, and a housing partially surrounding the diode. the terms "LED housing" or "housing" refer to that structural element that admits the partial or complete insertion of the diode within it and thereby forms a partial or total containment around the diode. An LED housing may comprise at least a portion made of polymeric material, which may be the compositions described herein.

As used herein, the term "polymer" refers to thermoplastic polymers, thermoset polymers, aramid polymers, and mixtures of these.

As used herein, the term "carbon particle" refers to particles containing carbon that is in the form of flakes and fibers and having a carbon content of about 75 weight percent, preferably greater than 85 weight percent, more preferably greater than 95 weight percent carbon. Carbon particles that can be coated include carbon powders, carbon flakes, graphite powders, graphite flakes, carbon fiber, glass carbon, amorphous carbon, and mixtures of these and may be naturally occurring or synthetic.

Flaky carbon particles have a length and width at least 2.5 times greater than its thickness and a length to width ratio of less than about 2 before coating. Fibrous carbon particles have a diameter of from 0.5 to 50 microns and an aspect ratio that is the ratio of length to width, of from 3 to 15 before coating.

As used herein, the term "coated carbon particles" refers to carbon particles in which at least a portion of or the entire exterior surface of the carbon particle has been coated with a coating material.

As used herein, the term "electrically insulating inorganic platy filler" refers to fillers that are both inorganic and platy as well as electrically insulating. A platy filler is flaky, flat, or disk shaped and has a length and width at least 2.5 times greater than its thickness and a length to width ratio of less than 2.

As used herein, the term "maximum length of longest dimension" refers to the greatest possible measurement of any aspect-length, breadth, width, depth, etc.-that can be measured of the electrically insulating, inorganic platy filler.

As used herein, the term "copolyester elastomer" refers to elastomeric polymers that are block copolymers containing a) hard polyester segments and b) soft and flexible polyester segments.

As used herein, the term "volume resistivity" refers to the electrical insulating capacity or electrical resistivity of a material. Volume resistivity of a molded test sample having dimensions of 16 mm X 16 mm X 16 mm is measured by a resistivity meter according to ASTM D-257 at 100 Volts ["100V"]. This voltage most closely represents the voltage at which an LED device operates. Volume resistivity is reported as ohms·centimeters (Ω•cm).

As used herein, the term "thermal conductivity" refers to the ability of a material to conduct thermal energy. Thermal conductivity of a molded test sample is measured in the in-plane direction using a laser flash method as described in ASTM E-1461. Thermal conductivity is reported as watts per meter kelvin (W/mK).

### Ranges

Any range set forth herein expressly includes its endpoints unless explicitly stated otherwise. Setting forth an amount, concentration, or other value or parameter as a range specifically discloses all ranges formed from any pair of any upper range limit and any lower range limit, regardless of whether such pairs are separately disclosed herein. The processes and articles described herein are not limited to the specific values disclosed in defining a range in the description.

### Preferred Variants

The disclosure herein of any variants in terms of materials, methods, steps, values, and/or ranges, etc.-whether identified as preferred variants or not-of the processes, compositions and articles described herein is specifically intended to disclose any process and article that includes ANY combination of such materials, methods, steps, values, ranges, etc. For the purposes of providing photographic and sufficient support for the claims, any such disclosed combination is specifically intended to be a preferred variant of the processes, compositions, and articles described herein.

### Generally

Described herein are polymer compositions that, when molded, exhibit both a certain electrical resistivity in terms of volume resistivity as well as a minimum thermal conductivity. These compositions comprise:
a) 20 to 70 volume percent of at least one polymer;
b) 10 to 35 volume percent of at least one coated carbon particle;
c) 7 to 35 volume percent of at least one electrically insulating inorganic platy filler having a maximum length of longest dimension of 20 microns;
d) optionally, 0.5 to 25 weight percent of a copolyester elastomer;
wherein: the volume percent of each component (a) to (d) is based on the total volume percent of the polymer composition; and these polymer compositions, when molded, have a volume resistivity of greater than 1x10¹⁴Ω•cm, when measured according to ASTM D-257 at 100 Volts and a thermal conductivity of at least 2.0 W/mK, when measured according to ASTM E-1461. The at least one polymer is preferably selected from the group consisting of thermoplastic polymers, thermosetting polymers, polyarylene sulfides, aramid polymers, polyesters, polyamides, polycarbonates, polyolefins, polyacetals, and mixtures of these. The at least one coated carbon particle is selected from the group consisting of coated graphite, coated carbon fiber, coated glass carbon, coated amorphous carbon, and mixtures of these. The least one electrically insulating, inorganic platy filler is selected from the group consisting of metal oxides, metal carbonates, carbonate minerals, metal hydroxides, metal nitrides, metal sulfides, phosphate minerals, clay minerals, silicate minerals, glass materials, and mixtures of these.

These polymer compositions, when molded, achieve the combined property of the recited volume resistivity and the recited thermal conductivity because of the addition of the recited filler having a specific shape and size as well as the recited coated carbon particles. The recited volume resistivity was measured on test samples of the molded polymer compositions described herein, which had dimensions of 16 mm x 16 mm x 16 mm, using a resistivity meter according to ASTM D-257 at 100 Volts ["100V"] because this voltage is most similar to those at which an LED device operates.

### Polymer (a)

The polymer used in the polymer composition includes thermoplastic polymers, thermoset polymers, aramid polymers, and mixtures of these. Non-limiting examples of thermoplastic polymers include polycarbonates, polyolefins such as polyethylene and polypropylene, polyacetals, polyamides, polyesters, polysulfones, polyarylene sulfides, liquid crystal polymers such as aromatic polyesters, polyphenylene oxides, polyarylates, polyetheretherketones (PEEK), polyetherketoneketones (PEKK), syndiotactic polystyrenes, thermoplastic vulcanizates (TPV), and mixtures of these. Preferred thermoplastic polymers include polycarbonates, polyolefins, polyarylene sulfide, polyacetals, polyamides, and polyesters, with polyesters most preferred.

Non-limiting examples of thermoset polymers include epoxy, polyurethane, vulcanized rubber, phenol-formaldehyde resins, unsaturated thermosetting polyester resins, and polyimide resins.

When the thermoplastic polymer is a polyester, the polyester is selected from the group consisting of polyesters derived from one or more dicarboxylic acids and one or more diols having two or more carbon atoms, copolyester thermoplastic elastomers, and mixtures of these. Examples of dicarboxylic acids include one or more of terephthalic acid, isophthalic acid, and 2,6-naphthalene dicarboxylic acid. Up to 20 mole percent of aliphatic dicarboxylic acids may be used to form the polyester including sebacic acid, adipic acid, azelaic acid, dodecanedioic acid, or 1,4-cyclohexanedicarboxylic acid. The diol component is selected from one or more of HO(CH2)ₙOH; 1,4-cyclohexanedimethanol; HO(CH2CH2O)ₘCH2CH2OH; and HO(CH2CH2CH2CH2O)_{z}CH2CH2CH2CH2OH, wherein n is an integer of 3 to 10, m on average is 1 to 4, and z is on average about 7 to about 40. Examples of diols include ethylene glycol; 1,3-trimethylene glycol; 1,4-tetramethylene glycol; 1,6-hexamethylene glycol; 1,8-octamethylene glycol; 1,10-decamethylene glycol; 1,3-propylene glycol; and 1,4-butylene glycol. Preferably, the polyesters are selected from poly(trimethylene terephthalate) (PTT), poly(1,4-butylene terephthalate) (PBT), poly(ethylene 2,6-naphthoate) (PEN), poly(1,4-butylene 2,6-naphthalate) (PBN), poly(1,4-cyclohexyldimethylene terephthalate) (PCT), poly(ethylene terephthalate) (PET), and copolymers and mixtures of these.

Polyamides used as polymers in these compositions are condensation products of one or more dicarboxylic acids and one or more diamines, and/or one or more aminocarboxylic acids, and/or ring-opening polymerization products of one or more cyclic lactams. The polyamide resins are selected from aliphatic polyamide resins, semi-aromatic polyamide resins and mixtures of these. The term "semi-aromatic" describes polyamide resins that comprise at least some aromatic carboxylic acid monomer(s) and aliphatic diamine monomer(s), in comparison with "aliphatic" which describes polyamide resins comprising aliphatic carboxylic acid monomer(s) and aliphatic diamine monomer(s).

Aliphatic polyamide resins are formed from aliphatic and alicyclic monomers such as diamines, dicarboxylic acids, lactams, aminocarboxylic acids, and their reactive equivalents. Suitable lactams include caprolactam and laurolactam. Carboxylic acid monomers useful in the preparation of fully aliphatic polyamide resins include, but are not limited to, aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Useful diamines include those having four or more carbon atoms, including, but not limited to tetramethylene diamine, hexamethylene diamine, octamethylene diamine, decamethylene diamine, 2-methylpentamethylene diamine, 2-ethyltetramethylene diamine, 2-methyloctamethylene diamine, trimethylhexamethylene diamine and mixtures of these. Suitable examples of fully aliphatic polyamide polymers include poly(ε-caprolactam) PA6; poly(hexamethylene hexanediamide) (PA6,6); poly (2-methylpentamethylene hexanediamide (PAD,6); poly(pentamethylene decanediamide) (PA5,10); poly(tetramethylene hexanediamide) (PA4,6); poly(hexamethylene decanediamide) (PA6,10); poly(hexamethylene dodecanediamide) (PA6,12); poly(hexamethylene tridecanediamide) (PA6,13); PA6,14; poly(hexamethylene pentadecanediamide) (PA6,15); PA6,16; poly(11-aminoundecanamide) (PA11); poly(12-aminododecanamide) (PA12); and copolymers and mixtures of these.

Preferred aliphatic polyamides include polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; polyamide 6,13; and copolymers and mixtures of these.

Semi-aromatic polyamide resins are homopolymers, copolymers, terpolymers, or higher polymers in which at least a portion of the acid monomers are selected from one or more aromatic carboxylic acids. The one or more aromatic carboxylic acids can be terephthalic acid or mixtures of terephthalic acid and one or more other carboxylic acids, like isophthalic acid, substituted phthalic acid such as for example 2-methylterephthalic acid and unsubstituted or substituted isomers of naphthalenedicarboxylic acid. Preferably, the one or more aromatic carboxylic acids are selected from terephthalic acid, isophthalic acid and mixtures of these. More preferably, the one or more carboxylic acids are mixtures of terephthalic acid and isophthalic acid.

Further, the one or more carboxylic acids can be mixed with one or more aliphatic carboxylic acids, like adipic acid; pimelic acid; suberic acid; azelaic acid; sebacic acid and dodecanedioic acid, adipic acid being preferred. More preferably, the mixture of terephthalic acid and adipic acid in the one or more carboxylic acids mixtures of the semi-aromatic polyamide resin contains at least 25 mole percent of terephthalic acid. Semi-aromatic polyamide resins comprise one or more diamines that may be chosen among diamines having four or more carbon atoms, including, but not limited to tetramethylene diamine, hexamethylene diamine, octamethylene diamine, nonamethylene diamine, decamethylene diamine, 2-methylpentamethylene diamine, 2-ethyltetramethylene diamine, 2-methyloctamethylene diamine; trimethylhexamethylene diamine, bis(p-aminocyclohexyl)methane; m-xylylene diamine; p-xylylene diamine and mixtures of these.

Suitable semi-aromatic polyamide resins include poly(hexamethylene terephthalamide) (polyamide 6,T), poly(nonamethylene terephthalamide) (polyamide 9,T), poly(decamethylene terephthalamide) (polyamide 10,T), poly(dodecamethylene terephthalamide) (polyamide 12,T), hexamethylene adipamide/hexamethylene terephthalamide copolyamide (polyamide 6,T/6,6), hexamethylene terephthalamide/hexamethylene isophthalamide (6,T/6,I), poly(m-xylylene adipamide) (polyamide MXD,6), hexamethylene adipamide/hexamethylene terephthalamide copolyamide (polyamide 6,T/6,6), hexamethylene terephthalamide/2-methylpentamethylene terephthalamide copolyamide (polyamide 6,T/D,T), hexamethylene adipamide/hexamethylene terephthalamide/hexamethylene isophthalamide copolyamide (polyamide 6,6/6,T/6,I); poly(caprolactam- hexamethylene terephthalamide) (polyamide 6/6,T) and copolymers and blends of the same. Preferred semi-aromatic polyamide resins comprised in the polyamide composition described herein include PA6,T; PA6,T/6,6; PA6,T/6,I; PAMXD,6; PA6,T/D,T and copolymers and mixtures of these.

The at least one polymer present in the polymer composition ranges from about 20 to about 70 volume percent, preferably from about 30 to about 65 volume percent, and more preferably from about 40 to about 65 volume percent, based on the total volume of the polymer composition.

### Coated Carbon Particle (b)

The coated carbon particle(s) in the polymer compositions described herein may be made from almost any carbon particle so long as the particle is either flaky or fiber shaped and meets the specific, recited size and shape. The carbon particles used herein have a carbon content of greater than about 75 weight percent, preferably greater than 85 weight percent, and more preferably greater than 95 weight percent, based on the total weight of the carbon particle. Carbon particles include carbon powders, carbon flakes, graphite powders, graphite flakes, carbon fiber, glass carbon, amorphous carbon, and mixtures of these and may be naturally occurring or synthetic. To be clear, the polymer compositions described herein may contain both coated flaky carbon particles and coated fibrous carbon particles.

Carbon particles described herein that are flaky have a non-fibrous shape and an aspect ratio, that is, a length to width ratio, of less than 2. In addition to this aspect ratio, such particles are typically flat or plate-like in shape and have a length and width at least 2.5 times greater than their thickness. These flaky carbon particles have either a length or width that ranges from 5 to 300 microns, preferably from 15 to 200 microns, and more preferably from 35 to 100 microns. Although the aspect ratio of these flaky carbon particles is less than about 2; it is preferably 1.5 and more preferably about 1.0. The minimum thickness of these flaky carbon particles is 0.5 microns. The maximum thickness is determined by the length and width of the flaky particle.

Fibrous carbon particles used in the compositions described herein have a diameter of from 0.5 to 50 microns and an aspect ratio that ranges from 3 to 15 and preferably from 4 to 10. A preferred fibrous particle is carbon fiber or pitch based carbon fiber. Pitch based carbon fiber having a thermal conductivity of 500 W/mK or greater is most preferred.

The coating material of the carbon particle creates a coating on the surface of the particle that is not removed during the manufacture of the polymer compositions described herein. Put differently, the coating of the carbon particles must withstand the temperatures to which the polymer compositions described herein are exposed by continuing to coat the particles throughout preparation of these compositions and their molding. Coating materials may be metallic or polymeric.

If a metallic coating is used, it results in a metal oxide coating on the carbon particle. One kind of metallic coating may be any silica-containing material that can coat the particle surface. Specifically, when a silica-based material is used as a coating material, the resulting metal oxide coating is SiO₂. The SiO₂ can be formed from SiO₂ precursors such as tetra ethoxy silane (TEOS) and tetra methoxy silane (TMOS).

If a polymeric coating is used, it may be thermoset polymers or any polymer with a melting point higher than the preparation or molding temperatures of the polymer compositions described herein. Some polymeric coatings include, but are not limited to, polyimides, melamine resins and phenol based resins.

The surface of the coated carbon particle(s) can further comprise a coupling agent to improving the interfacial bonding between the surface of the coated carbon particle and polymer (a). Non-limiting examples of coupling agents include metal hydroxides and alkoxides of Group IIIa thru VIIIa, Ib, IIb, IIIb, and IVb of the Periodic Table and the lanthanides. Specific examples of coupling agents include metal hydroxides and alkoxides of metals selected from the group consisting of Ti, Zr, Mn, Fe, Co, Ni, Cu, Zn, Al, and B. Preferred metal hydroxides and alkoxides are those of Ti and Zr. Specific metal alkoxide coupling agents are titanate and zirconate orthoesters and chelates including compounds of the formula (I), (II) and (III):

M(OR)₄ (I)

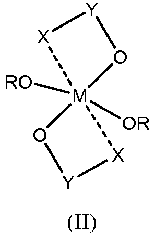

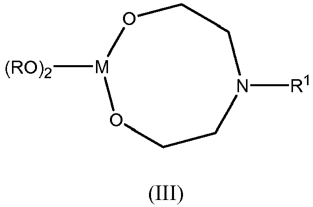

wherein
M is Ti or Zr;
R is a monovalent C₁ - C₈ linear or branched alkyl;
Y is a divalent radical selected from -CH(CH₃)-, -C(CH₃)=CH₂-, or -CH₂CH₂-;
X is selected from OH, -N(R1)₂, -C(O)OR₃, -C(O)R₃, -CO₂⁻A⁺; wherein
R¹ is a -CH₃ or C₂ - C₄ linear or branched alkyl, optionally substituted with a hydroxyl or an ether oxygen; provided that no more than one heteroatom is bonded to any one carbon atom;
R³ is C₁ - C₄ linear or branched alkyl; and
A⁺ is selected from NH⁴⁺, Li⁺, Na⁺, or K⁺.

The coupling agent can be added to the coated carbon particles before the coated carbon particles are mixed with polymer (a) or can be added during blending of the electrically insulating inorganic platy filler with polymer (a). The amount of coupling agent is preferably 0.1 to 5 wt%, preferably 0.5 to 2 wt% of the weight of coated carbon particles added to the composition.

The coated carbon particle in the polymer compositions described herein ranges from 10 to 35 volume percent, preferably from 15 to 35 volume percent, and more preferably from 20 to 35 volume percent, based on the total volume of the polymer compositions.

### Electrically Insulating Inorganic Platy Filler (c)

The at least one electrically insulating inorganic platy filler in the polymer compositions described herein should have a length and width at least 2.5 times greater than its thickness and an aspect (length to width) ratio of less than 2. Preferably, the electrically insulating inorganic platy filler preferably has a length and width at least 5 times greater than its thickness, and more preferably a length and width at least 10 times greater than its thickness. The electrically insulating inorganic platy fillers have a maximum length of longest dimension of 20 microns, preferably 10 microns, and more preferably 5 microns.

The at least one electrically insulating, inorganic platy filler used in the polymer composition described herein has an electrical resistivity (p) of at least 1×10⁹ (Ω •m) measured at 20°C. There is no restriction on the type of electrically insulating inorganic platy filler used as long as it has an electrical resistivity of at least 1 × 10⁹ (Ω •m). Non-limiting examples of electrically insulating inorganic platy fillers include metal oxides, metal carbonates, carbonate minerals, metal hydroxides, metal nitrides, metal sulfides, phosphate minerals, clay minerals, silicate minerals, glass materials, and mixtures of these.

Examples of metal oxides include aluminum oxide (Al₂O₃), zinc oxide (ZnO), titanium oxide (TiO₂), iron oxide (FeO), magnesium oxide (MgO), silicon oxide (SiO₂), boehmite (Al₂O₃▪ H₂O) and mixtures of these. Examples of metal carbonates include calcium carbonate (CaCO₃), magnesium carbonate (MgCO₃), and mixtures of these. Examples of carbonate minerals include calcite (polymorph of CaCO₃), aragonite (crystal forms of CaCO₃), dolomite (CaMg(CO₃)₂), hydrotalcite (Mg₆Al₂CO₃(OH)₁₆·4(H₂O)), pyroaurite (Mg₆Fe₂(CO₃)(OH)₁₆4(H2O)), stichtite (Mg₆Cr₂ CO₃(OH)₁₆•4H₂O), desautelsite (Mg₆ Mₙ₃₊₂(CO₃)(OH)₁₆.4H₂O), manasseite (Mg₆Al₂(CO₃)(OH)₁₆4H₂O) and mixtures of these. Examples of metal hydroxides include aluminum hydroxide (Al(OH)₃), magnesium hydroxide (Mg(OH)₂), and mixtures of these. Examples of metal nitrides include boron nitride (BN), aluminum nitride (AlN), silicon nitride (Si₃N₄), and mixtures of these. Examples of metal sulfides include molybdenum sulfide (MoS₂), tungsten sulfide (WS₂), zinc sulfide (ZnS) and mixtures of these. Examples of phosphate minerals include apatite (Ca₅(PO₄)₃(F,Cl,OH)), hydroxyapatite (Ca₅(PO₄)₃(OH)), and mixtures of these. Examples of silicate minerals include serpentine ((Mg,Fe)₃Si₂O₅(OH)₄), pyrophyllite (Al₂Si₄O₁₀(OH)₂), kaolin clay, sericite (KAl₂AlSi₃O₁₀(OH)₂), montmorillonite ((Na,Ca)₀.₃₃(Al,Mg)₂Si₄O₁₀(OH)₂·nH₂O), chlorite group of minerals, talc, vermiculite, monoclinic clay-like minerals such as the smectite group of minerals, mica, diatomite (SiO₂·nH₂O), and mixtures of these. The chemical formulas shown for many of these examples of electrically insulating, inorganic platy fillers are representative of the group or class of electrically insulating inorganic platy fillers which can be used in the polymer composition and in no way limit the electrically insulating inorganic platy filler to that specific formula.

The electrically insulating, inorganic platy filler(s) used in the polymer composition can be naturally mined or synthesized. The polymer composition may comprise one or more of these electrically insulating inorganic platy fillers. Suitable electrically insulating inorganic platy include aluminum oxide (alumina), zinc oxide, talc, magnesium oxide, silicon dioxide, boehmite, boron nitride, mica, aluminum nitride, silicon nitride, zinc sulfide, and mixtures of these. Preferred electrically insulating inorganic platy fillers include boehmite, talc, and mica.

The surface of the electrically insulating, inorganic platy filler can comprise at least one coupling agent for the purpose of improving the interfacial bonding between the electrically insulating, inorganic platy filler surface and the polymer as well as the coated carbon particle. The coupling agent can be added to the electrically insulating inorganic platy filler before mixing the electrically insulating inorganic platy filler with the polymer or can be added while blending the electrically insulating inorganic platy filler with the polymer. The coupling agent is preferably 0.1 to 5 weight percent, more preferably 0.5 to 2 weight percent of the weight of the volume of electrically insulating inorganic platy filler added to the polymer composition. In other words, the volume percent of electrically insulating inorganic platy filler, if weighed, has a specific weight. The amount of coupling agent used to coat the surface of the electrically insulating inorganic platy filler is preferably 0.1 to 5 weight percent of the weight of electrically insulating, inorganic platy filler used in the polymer composition.

The total volume of the electrically insulating, inorganic platy filler in these compositions ranges from about 7 to about 35 volume percent, preferably from about 10 to 35 volume percent and more preferably from 20 to 35 volume percent, based on the total volume of the polymer composition.

In these compositions, either the coated carbon particle may preferably range from 20 to 35 volume percent of the total volume of the polymer composition or the electrically insulating inorganic platy filler may preferably range from 20 to 35 volume percent of the total volume of the polymer composition or both the coated carbon particle and the electrically insulating inorganic platy filler may each range from 20 to 35 volume percent of the total volume of the polymer composition.

### Copolyester Elastomers (d)

The optional copolyester elastomers which can be used in the polymer compositions are block copolymers containing a) hard polyester segments and b) soft and flexible polyester segments. Examples of hard polyester segments are polyalkylene terephthalates, poly(cyclohexanedicarboxylic acid cyclohexanemethanol). Examples of soft polyester segments are aliphatic polyesters, including polybutylene adipate, polytetramethyladipate and polycaprolactone. The copolyesterester elastomers contain blocks of ester units of a high melting polyester and blocks of ester units of a low melting polyester which are linked together through ester groups and/or urethane groups. Examples of copolyester elastomers are HYTREL® thermoplastic polyester elastomers available from E.I. DuPont de Nemours and Company, Wilmington, DE. When used, the concentration of copolyester elastomer in the polymer composition ranges from about 0.5 to about 25 volume percent, preferably from about 2 to about 20 volume percent of the total volume of the polymer composition.

### Additional Ingredients

The polymer compositions described herein may optionally include one or more nucleating agents, which include talc and boron nitride. The polymer compositions may also comprise one or more flame retardants, flame retardant synergists, heat stabilizers, antioxidants, dyes, mold release agents, lubricants, and UV stabilizers. When used, the total of the additional ingredients will preferably range from about 0.1 to about 10 weight percent, based on the total weight of the polymer composition.

### Making the Polymer Compositions Described Herein

The polymer compositions described herein may be made using methods known to those skilled in the art, such as, for example, injection molding, blow molding, or extrusion. Molding these compositions facilitates the making of articles comprising the compositions. In addition, articles may be made by extruding these compositions. Such articles include motor housings, lamp housings, lamp housings in automobiles and other vehicles, and electrical and electronic housings. Examples of lamp housings in automobiles and other vehicles are front and rear lights, including headlights, tail lights, and brake lights, particularly those that use light-emitting diode (LED) lamps. The articles may serve as replacements for articles made from aluminum or other metals in many applications.

### EXAMPLES

The present invention is illustrated by, but not limited to, the following examples (E) and comparative examples (C).

### Materials

PBT - Polybutylene terephthalate polyester with an intrinsic viscosity of about 0.68 dl/g.
PTT - Polytrimethylene terephthalate polyester with an intrinsic viscosity of about 1.02 dl/g.
PEE - A thermoplastic copolyester elastomer available as HYTREL® 4068 from E.I. DuPont de Nemours and Company, Wilmington, DE.
Boehmite A - An inorganic platy filler having an average particle size of 15 microns available as Celasule BMF from Kawai Lime Industry Co., Ltd.
Boehmite B - A spherical particle having an average particle size of 4 microns available as Celasule BMT from Kawai Lime Industry Co., Ltd.
Talc A - A platy talc having an average particle size of 5 microns available as LMS 200 from Fuji Talc Industrial Co., Ltd..
Talc B - A platy talc having an average particle size of 19 microns available as NK48 from Fuji Talc Industrial Co., Ltd.
Talc C - A platy talc having an average particle size of 26 microns available from Fuji Talc Industrial Co., Ltd..
Mica A - An inorganic platy filler having an average particle size of 5 microns available as Mica SJ-005 from Yamaguchi Mica Co., Ltd.
Mica B - An inorganic platy filler having an average particle size of 10 microns available from Yamaguchi Mica Co., Ltd.
Mica C - An inorganic platy filler having an average particle size of 26 microns available from Repco Inc.
Mica D - An inorganic platy filler having an average particle size of 180 microns available as Mica B-82 from Yamaguchi Mica Co., Ltd.
Boron Nitride - An inorganic platy filler having an average particle size of 5 microns available as Boron Nitride GP from Yamaguchi Mica Co., Ltd.
FR-1 - a granular, brominated epoxy flame retardant having a mean molecular weight of 10,000 available as SR-T 5000 from Sakamoto Yakuhin Kogyo.
FR-2 - antimony trioxide/Polyethylene(80/20 by weight) master batch available as PE/FR-80 from Kawasaki Sanko Kasei.
Graphite - Graphite having an average particle size of 42 microns available as PC99-300M from Ito Graphite Co., Ltd.
CF1 - A pitch based carbon fiber having average fiber length of 50 microns, a fiber diameter of 11 microns, and an aspect ratio (L:W) of 4.5 available from Mitsubishi Plastics as DIALEAD® K223HM.
CF2 - Pitch based carbon fiber with average fiber length of 200 microns, fiber diameter of 11 microns, and aspect ratio (L:W) of 18 available as DIALEAD® K223HM from Mitsubishi Plastics.
CTAB - Hexadecyl trimethyl ammonium bromide
TEOS - Tetraethyl orthosilicate

### Methods

### Thermal Conductivity (TC)

The thermal conductivity of the molding obtained above was measured by a xenon flash apparatus (LFA 447 NanoFlash®, NETZSCH company) according to ASTM E-1461.

### Volume Resistivity (VR)

The volume resistivity of the molding obtained above was measured by a resistivity meter (Hiresta UP: Model MCP-HT450, Mitsubishi Chemical Analytech Co., Ltd.) according to ASTM D-257. The maximum volume resistivity that can be measured by this method is 1.0 x10¹⁴ Ω•cm

### Particle Size Measurement

The average particle size D50 was measured by laser diffraction according to JIS R1629.

### Preparation of Coated Graphite Particles

Graphite particles used as the carbon particle were coated with a silica based coating material using the following process. The quantity of each ingredient is shown in Table 1. Isopropyl alcohol (IPA) and deionized water were mixed together to form the solvent. While the solvent was being stirred at 60°C, a 25% concentration of ammonia in water mixture was added to the solvent as the catalyst, hexadecyl trimethyl ammonium bromide (CTAB, CAS# 57-09-0) added as a surfactant, and graphite particles having an average particle size of 42 microns were added to the solvent. While this mixture was being stirred, tetraethyl orthosilicate (TEOS, CAS. 78-10-4) was added to the mixture. The mixture was stirred at 60°C for 2 hours by a magnetic stirrer and filtered to collect the silica coated graphite particles. The silica coated graphite articles were dried for 24 hours at room temperature.

**Table 1**

| **Material** | **Amount (g)** |
|---|---|
| Graphite | 1.15 |
| CTAB | 0.02 |
| TEOS | 1.26 |
| IPA | 18 |
| Water | 0.46 |
| Catalyst | 0.92 |

### Preparation of Coated Carbon Fiber Particles

To prepare coated carbon fiber particles, carbon fibers were coated with a silica-based coating material using the following process. The quantity of each ingredient is shown in Table 2. Ethyl alcohol (EtOH) and deionized water are mixed together to form the solvent. While the solvent was being stirred at 60°C, 25% concentrated ammonia in water was added to the solvent as the catalyst, CTAB added as a surfactant, and carbon fibers were added to the solvent. While this mixture was being stirred, tetraethyl orthosilicate TEOS was added to the mixture. The mixture was stirred at 60°C for 2 hours by a magnetic stirrer and filtered to collect the silica coated carbon fibers. The coated carbon fibers (CCF1 and CCF2) were dried for 24 hours at room temperature. CF2 was coated twice using this process. CF1 was coated only once.

**Table 2**

| **Material** | **Amount (g)** |
|---|---|
| Carbon Fiber | 1.03 |
| CTAB | 3.96 |
| TEOS | 113.4 |
| Water | 10.35 |
| EtOH | 405 |
| Catalyst | 82.8 |

### Preparation of Polymer Composition

Tables 3 - 5 exhibits the volume concentration of each ingredient used in preparing the polymer compositions described herein. The coated carbon particles prepared from the above described process, the electrically insulating inorganic platy filler, the polymer and the optional polyester elastomer (PEE), when used, were mixed together at 270 °C for about 2 minutes by a micro-compounder from DSM Xplore Co., Ltd. to form polymer compositions described herein.

### Molding of Polymer Compositions Described Herein

The polymer compositions prepared from the ingredients listed in the Tables were injection molded using an injection molding machine to form molded plaques having the dimensions 16 mm long, 16 mm wide, and 16 mm thick.

### Discussion

C1 and C2 in Table 3 have a coated graphite particle but no inorganic platy filler. The maximum volume resistivity of C1 or C2 is only 7x10⁶ Ω•cm and the thermal conductivity is 2.2 and 2.4 W/mK, respectively. C3 has a coated graphite particle as well as an electrically insulating inorganic platy filler having a maximum length of longest dimension of 20 µm. However, the filler is at a concentration of only 6 volume percent. C3 has a volume resistivity of greater than 1x10¹⁴ Ω•cm but a thermal conductivity of only 1.5 W/mK, below the recited thermal conductivity of 2.0 W/mK. C4 has a filler that is not platy but relatively spherical. Although C3 exhibits the recited thermal conductivity, its volume resistivity is less than 1x10⁵ Ω•cm.

E1 and E2 comprise both an electrically insulating inorganic platy filler (Boehmite) having a maximum length of longest dimension of 20 µm and a coated graphite particle at a concentration greater than 10 volume percent. Both E1 and E2 have a volume resistivity of greater than 1 x10¹⁴Ω•cm and thermal conductivity of 2.3 and 2.9 W/mK, respectively. This combination of properties is obtained only when the electrically insulating inorganic platy filler has a maximum length of longest dimension of 20 µm and the coated graphite particle is present in the polymer compositions described herein at a concentration greater than 10 volume percent.

**Table 3**

| **Material** | **C1** | **C2** | **E1** | **C3** | **E2** | **C4** | **C5** |
|---|---|---|---|---|---|---|---|
| PBT | 56 | 53 | 46 | 60 | 53 | 53 | 60 |
| PEE | 19 | 18 | 15 | 7 | 4 | 4 | 7 |
| Coated Graphite Particle | 25 | 30 | 26 | 27 | 24 | 24 | 0 |
| Boehmite A | 0 | 0 | 13 | 6 | 18 | 0 | 12 |
| Boehmite B | 0 | 0 | 0 | 0 | 0 | 18 | 0 |
| Uncoated Graphite | 0 | 0 | 0 | 0 | 0 | 0 | 21 |

| **Properties** | | | | | | | |
|---|---|---|---|---|---|---|---|
| Particle Size in microns: Boehmite | - | - | 15 | 15 | 15 | 4 | 15 |
| TC (W/mK) | 2.2 | 2.4 | 2.3 | 1.5 | 2.9 | 3.0 | 2.7 |
| VR (Ω•cm) | 2x10⁶ | 7x10⁶ | >1x10¹⁴ | >1x10¹⁴ | >1x10¹⁴ | <1x10⁵ | <1x10⁵ |

| | | | | | | | |
|---|---|---|---|---|---|---|---|
| Tables Legend: PEE = copolyester elastomer TC = Thermal Conductivity VR = Volume Resistivity | | | | | | | |

Table 4 shows E3 to E5 that have a coated graphite particle and an electrically insulating inorganic platy filler having a maximum length of longest dimension of 20 µm at concentrations greater than 10 volume percent. Each of E3 to E5 have a thermal conductivity greater than 2.0 W/mK and a volume resistivity greater than 1.0x10¹⁴ Ω•cm. With an electrically insulating inorganic platy filler having a particle size of 26 µm and a coated graphite particle, C6 exhibits the recited thermal conductivity but the volume resistivity is only 1x10⁷ Ω•cm because the particle size of the electrically insulating inorganic platy filler is greater than 20 µm.

**Table 4**

| **Material** | **E3** | **E4** | **E5** | **C6** |
|---|---|---|---|---|
| PBT | 46 | 54 | 51 | 46 |
| PEE | 15 | 5 | 8 | 15 |
| Coated Graphite Particle | 26 | 25 | 25 | 26 |
| Talc A | 13 | 0 | 0 | 0 |
| Boron Nitride (BN) | 0 | 16 | 0 | 0 |
| Talc B | 0 | 0 | 16 | 0 |
| Talc C | 0 | 0 | 0 | 13 |

| **Property** | | | | |
|---|---|---|---|---|
| Particle Size in microns: Talc / BN | 5 | 8 | 19 | 26 |
| TC (W/mK) | 3.0 | 3.3 | 2.6 | 2.6 |
| VR (Ω•cm) | >1x10¹⁴ | >1x10¹⁴ | >1x10¹⁴ | 1x10⁷ |

In Table 5, both E6 and E7 have a coated graphite particle and a mica inorganic platy filler of a particle size of less than 20 µm and at volume concentrations of greater than 10 percent. E6 and E7 have volume resistivities greater than 1 x 10¹⁴ Ω•cm and thermal conductivities greater than 2.0 W/mK.

Even when the polymer composition comprises a coated graphite particle, when the particle size of the mica is greater than 20 µm, the volume resistivity of the resultant polymer compositions is less than 1 x 10⁵ Ω•cm. C7 and C8 show this principle, inasmuch as the maximum length of longest dimension of the mica particle in these compositions was 26 and 180 microns, respectively. Thus, C7 and C8 show that it is ONLY the combination of a coated graphite particle and an inorganic platy filler having a maximum length of longest dimension of 20 µm that achieves a molded polymer composition having both a volume resistivity of greater than 1x10¹⁴ Ω•cm and a thermal conductivity of at least 2.0 W/mK. When the inorganic platy filler has a maximum length of longest dimension of greater than 20 µm, even when a coated graphite particle is present, the polymer composition does not exhibit this combined property.

In the polymer compositions described herein, the coated carbon particle may be either flaky or fibrous in shape as well as include coated carbon particles that are both flaky and fibrous. E8 exhibits the use of both a coated flaky graphite and a coated fibrous carbon particle in one composition. Specifically, E8 has an electrically insulating inorganic platy filler and both a coated graphite particle having a flaky shape and a coated carbon fiber that has a fibrous shape and an aspect ratio of 4.5. The fibrous coated carbon fiber helps improve thermal conductivity of the polymer compositions described herein while simultaneously providing a volume resistivity of greater than 1x10¹⁴ Ω•cm.

Although C9 also uses both a coated graphite particle having a flaky shape and a coated carbon fiber that is fibrous but with an aspect ratio of 18, its volume resistivity is only 5x10⁸ Ω•cm. C9 shows that when a coated carbon fiber is used, the aspect ratio must be less than 15 in order to obtain the polymer compositions described herein that simultaneously exhibit a volume resistivity of greater than 1x10¹⁴ Ω•cm and a thermal conductivity of at least 2.0 W/mK.

**Table 5**

| **Materials** | **E6** | **E7** | **C7** | **C8** | **E8** | **C9** |
|---|---|---|---|---|---|---|
| PBT | 46 | 51 | 51 | 54 | 54 | 54 |
| PEE | 15 | 8 | 8 | 5 | 5 | 5 |
| Coated Graphite Particle | 26 | 25 | 25 | 25 | 13 | 13 |
| Mica A | 13 | | | | | |
| Mica B | | 16 | | | | |
| Mica C | | | 16 | | | |
| Mica D | | | | 16 | | |
| Coated Carbon Fiber 1 | | | | | 12 | |
| Coated Carbon Fiber 2 | | | | | | 6 |
| Boehmite A | | | | | 16 | 16 |

| **Property** | | | | | | |
|---|---|---|---|---|---|---|
| Particle Size in microns: Mica / BN | 5 | 10 | 26 | 180 | 15 | 15 |
| TC (W/mK) | 2.7 | 2.6 | 2.2 | 2.4 | 3.6 | 3.5 |
| VR (Ω•cm) | >1x10¹⁴ | >1x10¹⁴ | <1x10⁵ | <1x10⁵ | >1x10¹⁴ | 5x10⁸ |

In Table 6, example E9 comprises 34 volume percent of polyester, a coated graphite particle, a talc having a particle size of 5 microns. Example E9 exhibits a volume resistivity greater than 1.0x10¹⁴ Ω•cm and a thermal conductivity greater than 2.0 W/mK.

**Table 6**

| **Materials** | **E9** |
|---|---|
| PPT | 34 |
| PEE | 12 |
| Coated Graphite Particle | 25 |
| Talc A | 20 |
| FR-1 | 7 |
| FR-2 | 2 |

| **Property** | |
|---|---|
| Particle Size in microns: Talc | 5 |
| TC (W/mK) | 3.6 |
| VR (Ω•cm) | >1x10¹⁴ |

## Claims

1. A polymer composition, comprising:
(a) 20 to 70 volume percent of at least one polymer;
(b) 10 to 35 volume percent of at least one coated carbon particle selected from the group consisting of coated graphite, coated carbon fiber, coated glass carbon, coated amorphous carbon, and mixtures of these;
(c) 7 to 35 volume percent of at least one electrically insulating, inorganic platy filler having a maximum length of longest dimension of 20 microns and selected from the group consisting of metal oxides, metal carbonates, carbonate minerals, metal hydroxides, metal nitrides, metal sulfides, phosphate minerals, clay minerals, silicate minerals, glass materials, and mixtures of these; and
(d) optionally, 0.5 to 25 volume percent of a copolyester elastomer;
wherein:
the volume percent of each component (a) to (d) is based on the total volume of the polymer composition; and,
when molded, the polymer composition has:
a volume resistivity of greater than 1x10¹⁴ Ω·cm, when measured according to ASTM D-257 at 100 Volts; and
a thermal conductivity of at least 2.0 W/mK, when measured according to ASTM E-1461.

2. The polymer composition of claim 1, wherein:
(b) ranges from 20 to 35 volume percent of the total volume of the polymer composition.

3. The polymer composition of claim 1 or 2, wherein:
(c) ranges from 20 to 35 volume percent of the total volume of the polymer composition.

4. The polymer composition of any preceding claim, wherein:
(d) ranges from 2 to 20 volume percent of the total volume of the polymer composition.

5. A method, comprising:
molding a polymer composition, comprising:
(a) 20 to 70 volume percent of at least one polymer;
(b) 10 to 35 volume percent of at least one coated carbon particle selected from the group consisting of coated graphite, coated carbon fiber, coated glass carbon, coated amorphous carbon, and mixtures of these;
(c) 7 to 35 volume percent of at least one electrically insulating, inorganic platy filler having a maximum length of longest dimension of 20 microns and selected from the group consisting of metal oxides, metal carbonates, carbonate minerals, metal hydroxides, metal nitrides, metal sulfides, phosphate minerals, clay minerals, silicate minerals, glass materials, and mixtures of these;
(d) optionally, 0.5 to 25 volume percent of a copolyester elastomer;
wherein,
the volume percent of each component (a) to (d) is based on the total volume of the polymer composition; and
when molded, the polymer composition has:
a volume resistivity of greater than 1X10¹⁴ Ω·cm, when measured according to ASTM D-257 at 100 Volts; and
a thermal conductivity of at least 2.0 W/mK, when measured according to ASTM E-1461.

6. The method of claim 5, wherein:
(b) ranges from 20 to 35 volume percent of the total volume of the polymer composition.

7. The method of claim 5 or 6 , wherein:
(c) ranges from 20 to 35 volume percent of the total volume of the polymer composition.

8. The method of claim 5, 6 or 7, wherein:
(d) ranges from 2 to 20 volume percent of the total volume of the polymer composition.

9. An article comprising a polymer composition, comprising:
(a) 20 to 70 volume percent of at least one polymer;
(b) 10 to 35 volume percent of at least one coated carbon particle selected from the group consisting of coated graphite, coated carbon fiber, coated glass carbon, coated amorphous carbon, and mixtures of these;
(c) 7 to 35 volume percent of at least one electrically insulating, inorganic platy filler having a maximum length of longest dimension of 20 microns and selected from the group consisting of metal oxides, metal carbonates, carbonate minerals, metal hydroxides, metal nitrides, metal sulfides, phosphate minerals, clay minerals, silicate minerals, glass materials, and mixtures of these; and
(d) optionally, 0.5 to 25 volume percent of a copolyester elastomer;
wherein:
the volume percent of each component (a) to (d) is based on the total volume of the polymer composition; and,
when molded, the polymer composition has:
a volume resistivity of greater than 1x10¹⁴ Ω·cm, when measured according to ASTM D-257 at 100 Volts; and
a thermal conductivity of at least 2.0 W/mK, when measured according to ASTM E-1461.

10. The article of claim 9, wherein:
(b) ranges from 20 to 35 volume percent of the total volume of the polymer composition.

11. The article of claim 9 or 10, wherein:
(c) ranges from 20 to 35 volume percent of the total volume of the polymer composition.

12. The article of claim 9, 10, or 11, wherein:
(d) ranges from 2 to 20 volume percent of the total volume of the polymer composition.

13. The article of claim 8, 9, 10, 11, or 12, in the form of vehicle headlight housings, vehicle tail light housings, vehicle brake light housings, or light-emitting diode lamp housings.

## Patentansprüche

1. Polymerzusammensetzung, umfassend:
(a) 20 bis 70 Volumenprozent mindestens eines Polymers;
(b) 10 bis 35 Volumenprozent mindestens eines beschichteten Kohlenstoffteilchens ausgewählt aus der Gruppe bestehend aus beschichtetem Graphit, beschichteter Kohlenstofffaser, beschichtetem Glaskohlenstoff, beschichtetem amorphem Kohlenstoff und Mischungen dieser;
(c) 7 bis 35 Volumenprozent mindestens eines elektrisch isolierenden, anorganischen flachen Füllstoffs, der eine maximale Länge der längsten Dimension von 20 Mikron aufweist und aus der Gruppe ausgewählt ist bestehend aus Metalloxiden, Metallcarbonaten, Carbonatmineralien, Metallhydroxiden, Metallnitriden, Metallsulfiden, Phosphatmineralien, Tonmineralien, Silicatmineralien, Glasmaterialien und Mischungen dieser; und
(d) wahlweise 0,5 bis 25 Volumenprozent eines Copolyesterelastomers;
wobei
der Volumenprozentsatz jeder Komponente (a) bis (d) auf das Gesamtvolumen der Polymerzusammensetzung bezogen ist; und
wenn sie geformt ist die Polymerzusammensetzung Folgendes aufweist:
eine Volumenresistivität von mehr als 1x10¹⁴ Ω·cm, wenn ASTM D-257 entsprechend bei 100 Volt gemessen; und
eine Wärmeleitfähigkeit von mindestens 2,0 W/mK, wenn ASTM E-1461 entsprechend gemessen.

2. Polymerzusammensetzung nach Anspruch 1, wobei:
(b) im Bereich von 20 bis 35 Volumenprozent des Gesamtvolumens der Polymerzusammensetzung liegt.

3. Polymerzusammensetzung nach Anspruch 1 oder 2, wobei:
(c) im Bereich von 20 bis 35 Volumenprozent des Gesamtvolumens der Polymerzusammensetzung liegt.

4. Polymerzusammensetzung nach einem vorhergehenden Anspruch, wobei:
(d) im Bereich von 2 bis 20 Volumenprozent des Gesamtvolumens der Polymerzusammensetzung liegt.

5. Verfahren, umfassend:
das Formen einer Polymerzusammensetzung, umfassend:
(a) 20 bis 70 Volumenprozent mindestens eines Polymers;
(b) 10 bis 35 Volumenprozent mindestens eines beschichteten Kohlenstoffteilchens ausgewählt aus der Gruppe bestehend aus beschichtetem Graphit, beschichteter Kohlenstofffaser, beschichtetem Glaskohlenstoff, beschichtetem amorphem Kohlenstoff und Mischungen dieser;
(c) 7 bis 35 Volumenprozent mindestens eines elektrisch isolierenden, anorganischen flachen Füllstoffs, der eine maximale Länge der längsten Dimension von 20 Mikron aufweist und aus der Gruppe ausgewählt ist bestehend aus Metalloxiden, Metallcarbonaten, Carbonatmineralien, Metallhydroxiden, Metallnitriden, Metallsulfiden, Phosphatmineralien, Tonmineralien, Silicatmineralien, Glasmaterialien und Mischungen dieser;
(d) wahlweise 0,5 bis 25 Volumenprozent eines Copolyesterelastomers;
wobei
der Volumenprozentsatz jeder Komponente (a) bis (d) auf das Gesamtvolumen der Polymerzusammensetzung bezogen ist; und
wenn sie geformt ist, die Polymerzusammensetzung Folgendes aufweist:
eine Volumenresistivität von mehr als 1x10¹⁴ Ω·cm, wenn ASTM D-257 entsprechend bei 100 Volt gemessen; und
eine Wärmeleitfähigkeit von mindestens 2,0 W/mK, wenn ASTM E-1461 entsprechend gemessen.

6. Verfahren nach Anspruch 5, wobei:
(b) im Bereich von- 20 bis 35 Volumenprozent des Gesamtvolumens der Polymerzusammensetzung liegt.

7. Verfahren nach Anspruch 5 oder 6, wobei:
(c) im Bereich von 20 bis 35 Volumenprozent des Gesamtvolumens der Polymerzusammensetzung liegt.

8. Verfahren nach Anspruch 5, 6 oder 7, wobei:
(d) im Bereich von 2 bis 20 Volumenprozent des Gesamtvolumens der Polymerzusammensetzung liegt.

9. Artikel umfassend eine Polymerzusammensetzung, umfassend:
(a) 20 bis 70 Volumenprozent mindestens eines Polymers;
(b) 10 bis 35 Volumenprozent mindestens eines beschichteten Kohlenstoffteilchens ausgewählt aus der Gruppe bestehend aus beschichtetem Graphit, beschichteter Kohlenstofffaser, beschichtetem Glaskohlenstoff, beschichtetem amorphem Kohlenstoff und Mischungen dieser;
(c) 7 bis 35 Volumenprozent mindestens eines elektrisch isolierenden, anorganischen flachen Füllstoffs, der eine maximale Länge der längsten Dimension von 20 Mikron aufweist und aus der Gruppe ausgewählt ist bestehend aus Metalloxiden, Metallcarbonaten, Carbonatmineralien, Metallhydroxiden, Metallnitriden, Metallsulfiden, Phosphatmineralien, Tonmineralien, Silicatmineralien, Glasmaterialien und Mischungen dieser; und
(d) wahlweise 0,5 bis 25 Volumenprozent eines Copolyesterelastomers;
wobei
der Volumenprozentsatz jeder Komponente (a) bis (d) auf ein Gesamtvolumen der Polymerzusammensetzung bezogen ist; und
wenn sie geformt ist, die Polymerzusammensetzung Folgendes aufweist:
eine Volumenresistivität von mehr als 1x10¹⁴ Ω·cm, wenn ASTM D-257 entsprechend bei 100 Volt gemessen; und
eine Wärmeleitfähigkeit von mindestens 2,0 W/mK, wenn ASTM E-1461 entsprechend gemessen.

10. Artikel nach Anspruch 9, wobei:
(b) im Bereich von 20 bis 35 Volumenprozent des Gesamtvolumens der Polymerzusammensetzung liegt.

11. Artikel nach Anspruch 9 oder 10, wobei:
(c) im Bereich von 20 bis 35 Volumenprozent des Gesamtvolumens der Polymerzusammensetzung liegt.

12. Artikel nach Anspruch 9, 10 oder 11, wobei:
(d) im Bereich von 2 bis 20 Volumenprozent des Gesamtvolumens der Polymerzusammensetzung liegt.

13. Artikel nach Anspruch 8, 9, 10, 11 oder 12 in Form von Fahrzeugscheinwerfergehäusen, Fahrzeughecklichtgehäusen, Fahrzeugbremslichtgehäusen oder Gehäusen für eine lichtemittierende Diodenlampe.

## Revendications

1. Composition polymère, comprenant:
(a) de 20 à 70 pour cent en volume d'au moins un polymère;
(b) de 10 à 35 pour cent en volume d'au moins une particule de carbone enrobée sélectionnée dans le groupe constitué du graphite enrobé, de la fibre de carbone enrobée, du carbone vitrifié enrobé, du carbone amorphe enrobé, et de leurs mélanges;
(c) de 7 à 35 pour cent en volume d'au moins une charge inorganique en plaque, électriquement isolante ayant une longueur maximale de la dimension la plus longue de 20 microns et sélectionnée dans le groupe constitué des oxydes métalliques, des carbonates métalliques, des minéraux carbonates, des hydroxydes de métal, des nitrures de métal, des sulfures de métal, des minéraux phosphates, des minéraux argileux, des minéraux silicates, des matériaux vitreux, et de leurs mélanges; et
(d) éventuellement, de 0,5 à 25 pour cent en volume d'un élastomère copolyester;
où:
le pourcentage en volume de chaque constituant (a) à (d) est basé sur le volume total de la composition polymère; et,
lorsqu'elle est moulée, la composition polymère présente:
une résistivité en volume supérieure à 1 x 10¹⁴ Ω•cm, lorsque mesurée selon la norme ASTM D-257 à 100 volts; et
une conductivité thermique d'au moins 2,0 W/mK, lorsque mesurée selon la norme ASTM E-1461.

2. Composition polymère selon la revendication 1, dans laquelle:
(b) s'étend de 20 à 35 pour cent en volume du volume total de la composition polymère.

3. Composition polymère selon la revendication 1 ou 2, dans laquelle:
(c) s'étend de 20 à 35 pour cent en volume du volume total de la composition polymère.

4. Composition polymère selon l'une quelconque des revendications précédentes, dans laquelle:
(d) s'étend de 2 à 20 pour cent en volume du volume total de la composition polymère.

5. Procédé, comprenant:
le moulage d'une composition polymère, comprenant:
(a) de 20 à 70 pour cent en volume d'au moins un polymère;
(b) de 10 à 35 pour cent en volume d'au moins une particule de carbone enrobée sélectionnée dans le groupe constitué du graphite enrobé, de la fibre de carbone enrobée, du carbone vitrifié enrobé, du carbone amorphe enrobé, et de leurs mélanges;
(c) de 7 à 35 pour cent en volume d'au moins une charge inorganique en plaque, électriquement isolante ayant une longueur maximale de la dimension la plus longue de 20 microns et sélectionnée dans le groupe constitué des oxydes métalliques, des carbonates métalliques, des minéraux carbonates, des hydroxydes de métal, des nitrures de métal, des sulfures de métal, des minéraux phosphates, des minéraux argileux, des minéraux silicates, des matériaux vitreux, et de leurs mélanges;
(d) éventuellement, de 0,5 à 25 pour cent en volume d'un élastomère copolyester;
où,
le pourcentage en volume de chaque constituant (a) à (d) est basé sur le volume total de la composition polymère; et
lorsqu'elle est moulée, la composition polymère présente:
une résistivité en volume supérieure à 1 x 10¹⁴ Ω•cm, lorsque mesurée selon la norme ASTM D-257 à 100 volts; et
une conductivité thermique d'au moins 2,0 W/mK, lorsque mesurée selon la norme ASTM E-1461.

6. Procédé selon la revendication 5, dans lequel:
(b) s'étend de 20 à 35 pour cent en volume du volume total de la composition polymère.

7. Procédé selon la revendication 5 ou 6, dans lequel:
(c) s'étend de 20 à 35 pour cent en volume du volume total de la composition polymère.

8. Procédé selon la revendication 5, 6 ou 7, dans lequel:
(d) s'étend de 2 à 20 pour cent en volume du volume total de la composition polymère.

9. Article comprenant une composition polymère, comprenant:
(a) de 20 à 70 pour cent en volume d'au moins un polymère;
(b) de 10 à 35 pour cent en volume d'au moins une particule de carbone enrobée sélectionnée dans le groupe constitué du graphite enrobé, de la fibre de carbone enrobée, du carbone vitrifié enrobé, du carbone amorphe enrobé, et de leurs mélanges;
(c) de 7 à 35 pour cent en volume d'au moins une charge en plaque inorganique, électriquement isolante ayant une longueur maximale de la dimension la plus longue de 20 microns et sélectionnée dans le groupe constitué des oxydes métalliques, des carbonates métalliques, des minéraux carbonates, des hydroxydes de métal, des nitrures de métal, des sulfures de métal, des minéraux phosphates, des minéraux argileux, des minéraux silicates, des matériaux vitreux, et de leurs mélanges; et
(d) éventuellement, de 0,5 à 25 pour cent en volume d'un élastomère copolyester;
où:
le pourcentage en volume de chaque constituant (a) à (d) est basé sur le volume total de la composition polymère; et,
lorsque moulée, la composition polymère présente:
une résistivité en volume supérieure à 1 x 10¹⁴ Ω•cm, lorsque mesurée selon la norme ASTM D-257 à 100 volts; et
une conductivité thermique d'au moins 2,0 W/mK, lorsque mesurée selon la norme ASTM E-1461.

10. Article selon la revendication 9, dans lequel:
(b) s'étend de 20 à 35 pour cent en volume du volume total de la composition polymère.

11. Article selon la revendication 9 ou 10, dans lequel:
(c) s'étend de 20 à 35 pour cent en volume du volume total de la composition polymère.

12. Article selon la revendication 9, 10, ou 11, dans lequel:
(d) s'étend de 2 à 20 pour cent en volume du volume total de la composition polymère.

13. Article selon la revendication 8, 9, 10, 11, ou 12, se présentant sous la forme de logements de phares automobiles, logements de phares arrières de véhicule, logements de feux de frein de véhicule, ou logements de lampes type diode électroluminescente.
